(19) Europäisches Patentamt
European Patent Office
Office européen des brevets

(11) **EP 3 557 535 A1**

(12) **EUROPEAN PATENT APPLICATION**

(43) Date of publication:
**23.10.2019 Bulletin 2019/43**

(51) Int Cl.:
**G06T 19/00** (2011.01)　　　**G06T 11/00** (2006.01)
**H04L 29/08** (2006.01)

(21) Application number: **18167898.8**

(22) Date of filing: **18.04.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nokia Technologies Oy**
**02610 Espoo (FI)**

(72) Inventors:
• MORPER, Hans-Jochen
  85253 Erdweg (DE)
• BAUER-HERMANN, Markus
  80804 Munchen (DE)

(74) Representative: **Nokia EPO representatives**
**Nokia Technologies Oy**
**Karakaari 7**
**02610 Espoo (FI)**

(54) **METHOD, SYSTEM AND APPARATUS FOR COLLABORATIVE AUGMENTED REALITY**

(57)　　An apparatus comprising means for: generating at least one parameter defining the apparatus point of view within a scene; generating at least one image capturing the scene and associated with the apparatus point of view; transmitting the at least one parameter defining the apparatus point of view within a scene and the at least one image capturing the scene and associated with the apparatus point of view to an additional apparatus independently.

Figure 5

**Description**

<u>Field</u>

The present application relates to a method, apparatus, and computer program and in particular but not exclusively to methods, apparatus, and computer programs related to collaborative augmented reality applications over multiple systems.

<u>Background</u>

A communication system can be seen as a facility that enables communication sessions between two or more entities such as user terminals, base stations/access points and/or other nodes by providing carriers between the various entities involved in the communications path. A communication system can be provided for example by means of a communication network and one or more compatible communication devices. The communication sessions may comprise, for example, communication of data for carrying communications such as voice, electronic mail (email), text message, multimedia and/or content data and so on. Non-limiting examples of services provided comprise two-way or multi-way calls, data communication or multimedia services and access to a data network system, such as the Internet.

In a wireless communication system at least a part of a communication session between at least two stations occurs over a wireless link.

A user can access the communication system by means of an appropriate communication device or terminal. A communication device of a user is often referred to as user equipment (UE). A communication device is provided with an appropriate signal receiving and transmitting apparatus for enabling communications, for example enabling access to a communication network or communications directly with other users. The communication device may access a carrier provided by a station or access point, and transmit and/or receive communications on the carrier.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (3G radio), long-term evolution (LTE) of the Universal Mobile Telecommunications System (UMTS), and now 5G New Radio (NR) radio-access technology. 5G NR is being standardized by the 3rd Generation Partnership Project (3GPP).

Besides low latency radio (5G NR), the 5G packet core is planned to further reduce propagation delays resulting from traffic being conveyed via gateways in pre-5G networks. The planned 5G core architecture allows user plane functions to be relocated such that terrestrial distances between peers involved in a conversation can be limited to a minimum. Therefore a pre-5G core 50 ms delay (added to connections) between peers that are close to each other can be reduced to about 5 ms.

<u>Summary</u>

In a first aspect there is provided an apparatus comprising means for: generating at least one parameter defining the apparatus point of view within a scene; generating at least one image capturing the scene and associated with the apparatus point of view; and transmitting the at least one parameter defining the apparatus point of view within a scene and the at least one image capturing the scene and associated with the apparatus point of view to an additional apparatus independently.

The means may be further configured for receiving, from the additional apparatus, at least one further parameter based on at least one further apparatus point of view and at least one further image independently, the at least one further image based on the at least one further apparatus capturing of the scene and associated with the at least one further apparatus point of view.

The means may be further configured for rendering at least one augmentation related element based on the at least one parameter defining the apparatus point of view within a scene and the at least one further parameter based on the at least one further apparatus point of view.

The means for rendering at least one augmentation related element based on the at least one parameter defining the apparatus point of view within a scene and the at least one further parameter based on the at least one further apparatus point of view may be configured for generating at least one object to be located within the at least one image based on the at least one further parameter.

The means may be further configured for displaying a combined image based on the at least one further image and the at least one object.

The means for receiving, from the additional apparatus, at least one further parameter based on at least one further apparatus point of view may be configured for receiving at least one of: at least one augmentation object information based on the received at least one parameter from others of the at least one further apparatus; at least one transformation matrix defining at least one further apparatus orientation; and at least one positional matrix defining at least one further apparatus position.

The means for receiving, from the additional apparatus the at least one further image may be further configured for receiving the combined image comprising at least one of: the at least one further image; the at least one image; a processed at least one further image; a processed at least one image; and an overlay element.

The means for generating at least one parameter defining the apparatus point of view within a scene may be further configured for generating at least one of: at least one transformation matrix defining an apparatus orientation; and at least one positional matrix defining an apparatus position.

The means for transmitting the at least one image capturing the scene and associated with the apparatus point of view to an additional apparatus may be further configured for encoding the at least one image capturing the scene before being configured for transmitting the at least one image.

The means may be further configured for implementing an augmented reality game comprising the displayed combined image, wherein the at least one parameter defining the apparatus point of view within a scene may be decoupled from the at least one image capturing the scene and associated with the apparatus point of view.

The means for transmitting the at least one parameter defining the apparatus point of view within a scene and the at least one image capturing the scene and associated with the apparatus point of view to an additional apparatus independently may be further configured for transmitting one of: at least one packet comprising the at least one parameter defining the apparatus point of view within a scene and at least one packet comprising the at least one image capturing the scene; and at least one packet comprising the at least one parameter defining the apparatus point of view within a scene and at least one packet comprising the at least one image capturing the scene and the at least one parameter defining the apparatus point of view within a scene.

According to a second aspect there is provided an apparatus comprising means for receiving from each of at least two separate further apparatus: at least one parameter defining the further apparatus point of view within a scene; and at least one image capturing the scene and associated with the further apparatus point of view, the at least one parameter defining the further apparatus point of view within a scene; and the at least one image capturing the scene and associated with the further apparatus point of view having been transmitted independently.

The means may be further configured for: processing and combining the received image capturing the scene to generate at least one combined image; transmitting to each of the at least two separate further apparatus the at least one combined image; transmitting to each further apparatus at least one parameter based on the received at least one parameter from others of the at least one further apparatus, wherein the at least one combined image and the at least one parameter based on the received at least one parameter from others of the at least one further apparatus are transmitted independently.

The means for transmitting to each of the at least two separate further apparatus the at least one combined image may be further configured for encoding the at least one combined image before being configured for transmitting the at least one combined image.

The means for transmitting to each of the at least two separate further apparatus the at least one combined image may be further configured for transmitting a combined image comprising at least one of: the at least one further image; the at least one image; a processed at least one further image; a processed at least one image; and an overlay element.

The means for transmitting to each of the at least two separate further apparatus the at least one combined image; and transmitting to each further apparatus at least one parameter based on the received at least one parameter from others of the at least one further apparatus may be further configured for transmitting one of: at least one packet comprising the at least one combined image and at least one further packet comprising the at least one parameter based on the received at least one parameter from others of the at least one further apparatus; and at least one packet comprising the at least one combined image and the at least one parameter based on the received at least one parameter from others of the at least one further apparatus and at least one further packet comprising the at least one parameter based on the received at least one parameter from others of the at least one further apparatus.

The means may be further configured for generating the at least one parameter based on the received at least one parameter from others of the at least one further apparatus, the at least one parameter may comprise at least one of: at least one augmentation object information based on the received at least one parameter from others of the at least one further apparatus; at least one transformation matrix defining the further apparatus orientation; and at least one positional matrix defining the further apparatus position.

A system may comprise: at least two user equipment, each comprising apparatus as discussed herein with respect to the first aspect and at least one game server comprising apparatus as discussed with respect to the second aspect and a communications network caused to enable communication between the at least two user equipment and the at least one game server, the system caused to enable an augmented reality game to be implemented on each of the at least two user equipment.

According to a third aspect there is provided an apparatus comprising at least one processor, and at least one memory including computer program code, wherein the at least one memory and the computer program code are configured, with the at least one processor, to cause the apparatus to: generate at least one parameter defining the apparatus point of view within a scene; generate at least one image capturing the scene and associated with the apparatus point of view; and transmit the at least one parameter defining the apparatus point of view within a scene and the at least one image capturing the scene and associated with the apparatus point of view to an additional apparatus independently.

The apparatus may be further caused to receive, from the additional apparatus, at least one further parameter based on at least one further apparatus point of view and at least one further image independently, the at least one further image based on the at least one further apparatus capturing of the scene and associated with the at least one further apparatus point of view.

The apparatus may be further caused to render at least one augmentation related element based on the at least one parameter defining the apparatus point of view within a scene and the at least one further parameter based on the at least one further apparatus point of view.

The apparatus caused to render at least one augmentation related element based on the at least one parameter defining the apparatus point of view within a scene and the at least one further parameter based on the at least one further apparatus point of view may be caused to generate at least one object to be located within the at least one image based on the at least one further parameter.

The apparatus may be further caused to display a combined image based on the at least one further image and the at least one object.

The apparatus caused to receive, from the additional apparatus, at least one further parameter based on at least one further apparatus point of view may be caused to receive at least one of: at least one augmentation object information based on the received at least one parameter from others of the at least one further apparatus; at least one transformation matrix defining at least one further apparatus orientation; and at least one positional matrix defining at least one further apparatus position.

The apparatus caused to receive, from the additional apparatus the at least one further image may be further caused to receive the combined image comprising at least one of: the at least one further image; the at least one image; a processed at least one further image; a processed at least one image; and an overlay element.

The apparatus caused to generate at least one parameter defining the apparatus point of view within a scene may be further caused to generate at least one of: at least one transformation matrix defining an apparatus orientation; and at least one positional matrix defining an apparatus position.

The apparatus caused to transmit the at least one image capturing the scene and associated with the apparatus point of view to an additional apparatus may be further caused to encode the at least one image capturing the scene before being caused to transmit the at least one image.

The apparatus may be further caused to implement an augmented reality game comprising the displayed combined image, wherein the at least one parameter defining the apparatus point of view within a scene may be decoupled from the at least one image capturing the scene and associated with the apparatus point of view.

The apparatus caused to transmit the at least one parameter defining the apparatus point of view within a scene and the at least one image capturing the scene and associated with the apparatus point of view to an additional apparatus independently may be further caused to transmit one of: at least one packet comprising the at least one parameter defining the apparatus point of view within a scene and at least one packet comprising the at least one image capturing the scene; and at least one packet comprising the at least one parameter defining the apparatus point of view within a scene and at least one packet comprising the at least one image capturing the scene and the at least one parameter defining the apparatus point of view within a scene.

According to a fourth aspect there is provided an apparatus comprising at least one processor, and at least one memory including computer program code, wherein the at least one memory and the computer program code are configured, with the at least one processor, to cause the apparatus to: receive from each of at least two separate further apparatus: at least one parameter defining the further apparatus point of view within a scene; and at least one image capturing the scene and associated with the further apparatus point of view, the at least one parameter defining the further apparatus point of view within a scene; and the at least one image capturing the scene and associated with the further apparatus point of view having been transmitted independently.

The apparatus may be further caused to: process and combine the received image capturing the scene to generate at least one combined image; transmit to each of the at least two separate further apparatus the at least one combined image; transmit to each further apparatus at least one parameter based on the received at least one parameter from others of the at least one further apparatus, wherein the at least one combined image and the at least one parameter based on the received at least one parameter from others of the at least one further apparatus are transmitted independently.

The apparatus caused to transmit to each of the at least two separate further apparatus the at least one combined image may be further caused to encode the at least one combined image before being configured for transmitting the at least one combined image.

The apparatus caused to transmit to each of the at least two separate further apparatus the at least one combined image may be further caused to transmit a combined image comprising at least one of: the at least one further image; the at least one image; a processed at least one further image; a processed at least one image; and an overlay element.

The apparatus caused to transmit to each of the at least two separate further apparatus the at least one combined image; and transmit to each further apparatus at least one parameter based on the received at least one parameter from others of the at least one further apparatus may be further caused to transmit one of: at least one packet comprising the at least one combined image and at least one further packet comprising the at least one parameter based on the received at least one parameter from others of the at least one further apparatus; and at least one packet comprising the at least one combined image and the at least one parameter based on the received at least one parameter from others of the at least one further apparatus and at least one further packet comprising the at least one parameter based on the received at least one parameter from others of the at least one further apparatus.

The apparatus may be further caused to generate the at least one parameter based on the received at least one parameter from others of the at least one further apparatus, the at least one parameter may comprise at least one of: at least one augmentation object information based on the received at least one parameter from others of the at least one further apparatus; at least one transformation matrix defining the further apparatus orientation; and at least one positional matrix defining the further apparatus position.

In a fifth aspect there is provided a method comprising: generating at least one parameter defining an apparatus point of view within a scene; generating at least one image capturing the scene and associated with the apparatus point of view; and transmitting the at least one parameter defining the apparatus point of view within a scene and the at least one image capturing the scene and associated with the apparatus point of view to an additional apparatus independently.

The method may further comprise receiving, from the additional apparatus, at least one further parameter based on at least one further apparatus point of view and at least one further image independently, the at least one further image based on the at least one further apparatus capturing of the scene and associated with the at least one further apparatus point of view.

The method may further comprise rendering at least one augmentation related element based on the at least one parameter defining the apparatus point of view within a scene and the at least one further parameter based on the at least one further apparatus point of view.

Rendering at least one augmentation related element based on the at least one parameter defining the apparatus point of view within a scene and the at least one further parameter based on the at least one further apparatus point of view may further comprise generating at least one object to be located within the at least one image based on the at least one further parameter.

The method may further comprise displaying a combined image based on the at least one further image and the at least one object.

Receiving, from the additional apparatus, at least one further parameter based on at least one further apparatus point of view may further comprise receiving at least one of: at least one augmentation object information based on the received at least one parameter from others of the at least one further apparatus; at least one transformation matrix defining at least one further apparatus orientation; and at least one positional matrix defining at least one further apparatus position.

Receiving, from the additional apparatus the at least one further image may be further configured for receiving the combined image comprising at least one of: the at least one further image; the at least one image; a processed at least one further image; a processed at least one image; and an overlay element.

Generating at least one parameter defining the apparatus point of view within a scene may further comprise generating at least one of: at least one transformation matrix defining an apparatus orientation; and at least one positional matrix defining an apparatus position.

Transmitting the at least one image capturing the scene and associated with the apparatus point of view to an additional apparatus may further comprise encoding the at least one image capturing the scene before being configured for transmitting the at least one image.

The method may further comprise implementing an augmented reality game comprising the displayed combined image, wherein the at least one parameter defining the apparatus point of view within a scene may be decoupled from the at least one image capturing the scene and associated with the apparatus point of view.

Transmitting the at least one parameter defining the apparatus point of view within a scene and the at least one image capturing the scene and associated with the apparatus point of view to an additional apparatus independently may further comprise transmitting one of: at least one packet comprising the at least one parameter defining the apparatus point of view within a scene and at least one packet comprising the at least one image capturing the scene; and at least one packet comprising the at least one parameter defining the apparatus point of view within a scene and at least one packet comprising the at least one image capturing the scene and the at least one parameter defining the apparatus point of view within a scene.

According to a sixth aspect there is provided a method comprising receiving at an apparatus from each of at least two separate further apparatus: at least one parameter defining the further apparatus point of view within a scene; and at least one image capturing the scene and associated with the further apparatus point of view, the at least one parameter defining the further apparatus point of view within a scene; and the at least one image capturing the scene and associated with the further apparatus point of view having been transmitted independently.

The method may further comprise: processing and combining the received image capturing the scene to generate at least one combined image; transmitting to each of the at least two separate further apparatus the at least one combined image; transmitting to each further apparatus at least one parameter based on the received at least one parameter from others of the at least one further apparatus, wherein the at least one combined image and the at least one parameter based on the received at least one parameter from others of the at least one further apparatus are transmitted independently.

Transmitting to each of the at least two separate further apparatus the at least one combined image may further comprise encoding the at least one combined image before being configured for transmitting the at least one combined image.

Transmitting to each of the at least two separate further apparatus the at least one combined image may further comprise transmitting a combined image comprising at least one of: the at least one further image; the at least one image; a processed at least one further image; a processed at least one image; and an overlay element.

Transmitting to each of the at least two separate further apparatus the at least one combined image; and transmitting to each further apparatus at least one parameter based on the received at least one parameter from others of the at least one further apparatus may further comprise transmitting one of: at least one packet comprising the at least one combined image and at least one further packet comprising the at least one parameter based on the received at least one parameter from others of the at least one further apparatus; and at least one packet comprising the at least one combined image and the at least one parameter based on the received at least one parameter from others of the at least one further apparatus and at least one further packet comprising the at least one parameter based on the received at least one parameter from others of the at least one further apparatus.

The method may further comprise generating the at least one parameter based on the received at least one parameter from others of the at least one further apparatus, the at least one parameter may comprise at least one of: at least one augmentation object information based on the received at least one parameter from others of the at least one further apparatus; at least one transformation matrix defining the further apparatus orientation; and at least one positional matrix defining the further apparatus position.

According to a seventh aspect there is provided a computer program comprising instructions [or a computer readable medium comprising program instructions] for causing an apparatus to perform at least the following: generating at least one parameter defining an apparatus point of view within a scene; generating at least one image capturing the scene and associated with the apparatus point of view; and transmitting the at least one parameter defining the apparatus point of view within a scene and the at least one image capturing the scene and associated with the apparatus point of view to an additional apparatus independently.

According to an eighth aspect there is provided a computer program comprising instructions [or a computer readable medium comprising program instructions] for causing an apparatus to perform at least the following: receiving at an apparatus from each of at least two separate further apparatus: at least one parameter defining the further apparatus point of view within a scene; and at least one image capturing the scene and associated with the further apparatus point of view, the at least one parameter defining the further apparatus point of view within a scene; and the at least one image capturing the scene and associated with the further apparatus point of view having been transmitted independently.

According to a ninth aspect there is provided a non-transitory computer readable medium comprising program instructions for causing an apparatus to perform at least the following: generating at least one parameter defining an apparatus point of view within a scene; generating at least one image capturing the scene and associated with the apparatus point of view; and transmitting the at least one parameter defining the apparatus point of view within a scene and the at least one image capturing the scene and associated with the apparatus point of view to an additional apparatus independently.

According to a tenth aspect there is provided a non-transitory computer readable medium comprising program instructions for causing an apparatus to perform at least the following: receiving at an apparatus from each of at least two separate further apparatus: at least one parameter defining the further apparatus point of view within a scene; and at least one image capturing the scene and associated with the further apparatus point of view, the at least one parameter defining the further apparatus point of view within a scene; and the at least one image capturing the scene and associated with the further apparatus point of view having been transmitted independently.

According to a eleventh aspect there is provided an apparatus comprising: parameter generating circuitry configured to generate at least one parameter defining an apparatus point of view within a scene; image generating circuitry configured to generate at least one image capturing the scene and associated with the apparatus point of view; and transmitting circuitry configured to transmit the at least one parameter defining the apparatus point of view within a scene and the at least one image capturing the scene and associated with the apparatus point of view to an additional apparatus independently.

According to a twelfth aspect there is provided an apparatus comprising: receiving circuitry configured to receive from each of at least two separate further apparatus: at least one parameter defining the further apparatus point of view within a scene; and at least one image capturing the scene and associated with the further apparatus point of view, the at least one parameter defining the further apparatus point of view within a scene; and the at least one image capturing the scene and associated with the further apparatus point of view having been transmitted independently.

According to a thirteenth aspect there is provided a computer readable medium comprising program instructions for causing an apparatus to perform at least the following: generating at least one parameter defining an apparatus point of view within a scene; generating at least one image capturing the scene and associated with the apparatus point of view; and transmitting the at least one parameter defining the apparatus point of view within a scene and the at least one image capturing the scene and associated with the apparatus point of view to an additional apparatus independently.

According to a fourteenth aspect there is provided a computer readable medium comprising program instructions for causing an apparatus to perform at least the following: receiving at an apparatus from each of at least two separate further apparatus: at least one parameter defining the further apparatus point of view within a scene; and at least one image capturing the scene and associated with the further apparatus point of view, the at least one parameter defining the further apparatus point of view within a scene; and the at least one image capturing the scene and associated with the further apparatus point of view having been transmitted independently.

The apparatus may comprise at least one processor and at least one memory including computer code for one or more programs.

In another aspect there is provided a computer program embodied on a non-transitory computer-readable storage medium, the computer program comprising program code for providing any of the above methods.

In another aspect there is provided a computer program product for a computer, comprising software code portions for performing the steps of any of the previous methods, when said product is run.

A computer program comprising program code means adapted to perform the method(s) may be provided. The computer program may be stored and/or otherwise embodied by means of a carrier medium.

In the above, many different embodiments have been described. It should be appreciated that further embodiments may be provided by the combination of any two or more of the embodiments described above.

In the above, many different embodiments have been described. It should be appreciated that further embodiments may be provided by the combination of any two or more of the embodiments described above.

Description of Figures

Embodiments will now be described, by way of example only, with reference to the accompanying Figures in which:

Figure 1 shows a schematic diagram of an example communication system comprising a base station and a plurality of communication devices (UEs) suitable for employing some embodiments;
Figure 2a shows a schematic diagram of an example UE device for implementation suitable for implementation with the system shown in Figure 1 in some embodiments;
Figure 2b shows a schematic diagram of an example server suitable for implementation with the system shown in Figure 1 in some embodiments;
Figure 3 shows a schematic view of an example virtual coordinate system according to some embodiments;
Figure 4 shows a schematic view of example functions implementing the coordination of the example virtual coordinate system according to some embodiments;
Figure 5 shows a flow diagram of an overview of an implementation of the coordination of the example virtual coordinate system according to some embodiments.

Detailed description

The concept as discussed in further detail hereafter is the design of a system comprising at least two electronic devices or apparatus each able to exchange, transmit and receive information that is suitable for display on the apparatus displays or through the apparatus speakers and which is generated or enriched by a server apparatus. Furthermore the information may be generated and/or captured at the apparatus (and may be controlled by a function at the server).

Some embodiments as discussed hereafter aim to improve on an expected 50 ms delay in communications. An improvement in the 50 ms delay is required. 50ms delays for example have been acceptable to date as 50ms is the time that elapses between the reception of two subsequent video frames of a 24 fps PAL video (the speed at which no human being is able to notice this difference), furthermore Lip-synchronity (video differs from audio) is noticeable with a 200ms delay and vehicle to vehicle (V2x) communications and applications require 100-150 ms delay accuracy.

However new applications will require latencies below 50 ms and the embodiments described hereafter attempt to provide the technical solutions behind the concept.

One potential low-latency application is in mobile gaming. Mobile gaming will play an increasing role in future mobile networks. A typical gamer spends more than 3h per day on gaming with an increasing share of mobile access. Additionally, gaming between different peers (more than one player) including server based assistance and including augmented reality mixed with real world views (geo caching) has become more dominant. These trends lead to very specific behaviours where small improvements in latency delay are significantly requested. For example specific input devices are designed to allow maximum time saving when entering commands (e.g. keyboards with programmable character sequences).

Furthermore gaming applications which combine live content (live video) mixed with augmented content (generated objects being placed in a scene) which are played on a solo are known and co-operative versions of these augmented reality games have been suggested. These co-operative augmented content games may require immediate action in order to score against other players, as such the embodiments as discussed herein are suitable for implementing such games.

An example co-operative augmented content game may be one where two or more users with smart phones (or other suitable electronic devices or apparatus) use a camera to record the scene. If users of the smart phones are close by (as indicated in the examples herein but may be otherwise in further embodiments), they can view the same scene (a room or a landscape) which is viewed from (slightly) different angles.

When both capture the scene (generate a live record of what they see) and when this view is shared with their peer(s), both views can be presented to each user. Thus in some embodiments where there are two players, half of the screen will show what is recorded with the device's camera, the other half will show the viewpoint of the other user's device.

An example simple game can be implemented which renders objects, for example a moving (flying, walking, ...) bird into the scene which is located according to the other user's device point-of-view. Thus there are located (in this example two birds - one for each user). When a user aims his camera to the right and the other to the left of a scene, the user looking to the right will get his bird placed [augmented in] at a position which is left to where they are looking at. The user can also see where the bird is placed since they can see what the other user device's camera is recording on that part of his screen which displays the other user's point-of-view. In order to catch the bird, the user has to focus on it using the camera - which will force the user to move [turn to the left] in order to get the other user's device point-of-view the bird was placed.

In this example furthermore a score will be applied which scales according to the elapsed time to catch a bird by 1/x. In other words in this example if a bird is captured immediately a player will get a score of 1000, but if the bird is only captured after 20s, the score will be 1.

The effect of time delays with respect to this example game is such that played over several rounds without delay and with 50ms delay (data transmission between peers), results in the situation that whereas users do not perceive any difference in performance (in both the delayed and instant example the experience is fluid both for video and audio) but the scores differ such that playing without delay may result in -20% higher scores than with delay.

The embodiments as discussed hereafter aim to produce a gaming or application experience which results in a low delay and for example in a gaming environment enable users to score higher in this example compared to systems which suffer an even unnoticeable delay.

In the following examples therefore the concept may be one in which image data or video information transmission is independent from data used to define a common virtual co-ordinate system (for example the augmented reality information which is described hereafter which may be used to construct a 'common' world view for the electronic devices). This concept may be implemented in some embodiments in a system comprising a server (a suitable gaming or application server located at a suitable location within or over the network infrastructure), a communication network and devices (smart phones or similar electronic devices) that are equipped with suitable functionality. This suitable functionality may for example be to detect movement (for example a gyroscope), orientation (for example a digital compass) and optional geographical positions (for example a satellite positioning or similar positional estimation function). Furthermore, the device may comprise a camera to record a (live) video and a display to display images to the user.

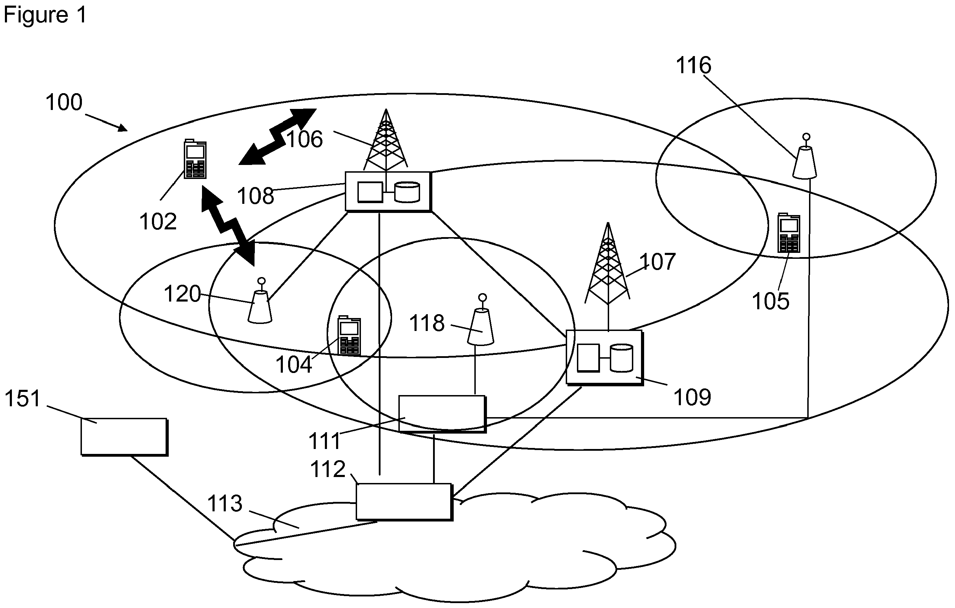

Figure 1 shows a general system within with embodiments may be implemented. The system 100 shown in Figure 1 comprises a cellular based wireless communications system however the system may comprise any wireless communications or data network.

Within the system 100, such as that shown in Figure 1, the cellular communications system is shown comprising electronic (communication) devices or user equipment (UE) 102, 104, 105 which may be provided wireless access via at least one base station or similar wireless transmitting and/or receiving node or point. Base stations (BTS, NodeB (NB), enhanced NodeB (eNB), new generation NodeB (gNB)) and may be typically controlled by at least one appropriate controller apparatus, so as to enable operation thereof and management of mobile communication devices in communication with the base stations. The controller apparatus may be located in a radio access network (e.g. wireless communication system 100) or in a core network (CN) (not shown) and may be implemented as one central apparatus or its functionality may be distributed over several apparatus. The controller apparatus may be part of the base station and/or provided by a separate entity such as a Radio Network Controller (RNC). In Figure 1 control apparatus 108 and 109 are shown to control the respective macro level base stations 106 and 107. The control apparatus of a base station can be interconnected with other control entities. The control apparatus is typically provided with memory capacity and at least one data processor. The control apparatus and functions may be distributed between a plurality of control units. In some systems, the control apparatus may additionally or alternatively be provided in a radio network controller or a base station controller (BSC).

The system may however be considered to have a so-called "flat" architecture, without the provision of RNCs; rather the (e)NB is in communication with a system architecture evolution gateway (SAE-GW) and a mobility management entity (MME), which entities may also be pooled meaning that a plurality of these nodes may serve a plurality (set) of (e)NBs. Each UE is served by only one MME and/or S-GW at a time and the (e)NB keeps track of current association. SAE-GW is a "high-level" user plane core network element in LTE, which may consist of the S-GW and the P-GW (serving gateway and packet data network gateway, respectively). The functionalities of the S-GW and P-GW are separated and they are not required to be co-located. Although the following examples are shown using the network infrastructure described above it is understood that in some embodiments any suitable network infrastructure may be employed. Thus for example in some embodiments a 5G core may be employed. The 5G core is configured with a mobility anchor for each individual connection (UPF or user plane function) which can be moved (UPF relocation) as the device moves. Traffic from/to an application server may be egressed/ingressed at different locations in a network (e.g. MEC or mobile edge computing, local data centre) which in return requires that applications (such as a gaming server) can exist in multiple instances at multiple locations and become active/inactive appropriately steered by an application function (AF) which performs the suitable handshaking operations with the 5G network (and may be the closest egress point to a local data centre depending on the electronic devices location) and shifts the servicing control to an appropriate instance of the (gaming or otherwise) application at a data centre matching said egress conditions.

In Figure 1 base stations 106 and 107 are shown as connected to a wider communications network 113 via gateway 112. A further gateway function may be provided to connect to another network.

The smaller base stations 116, 118 and 120 may also be connected to the network 113, for example by a separate gateway function and/or via the controllers of the macro level stations. The base stations 116, 118 and 120 may be pico or femto level base stations or the like. In the example, stations 116 and 118 are connected via a gateway 111 whilst station 120 connects via the controller apparatus 108. In some embodiments, the smaller stations may not be provided. Smaller base stations 116, 118 and 120 may be part of a second network, for example WLAN and may be WLAN APs.

The system 100 may further comprise a server for controlling the gaming experience, which may be known as the game server 151. The game server 151 may in some embodiments be may be any suitable device or devices configured to be coupled to the user equipment such as shown in Figure 1 by the indirect coupling between the basestation 106/107 and game server 151 via the core network part 112 of the communications system. A game server 151 in some embodiments may be implemented functionally as part of the electronic device. Therefore in some embodiments a single electronic device may implement the functionality of the game server or the game server functionality may be distributed over more than one electronic device.

Furthermore although in the following examples the information is transmitted from electronic device to basestation and network and back to a further electronic device via a (separate) basestation it is understood that in some embodiments the network may be a 'mesh' network of electronic devices communicating between each other.

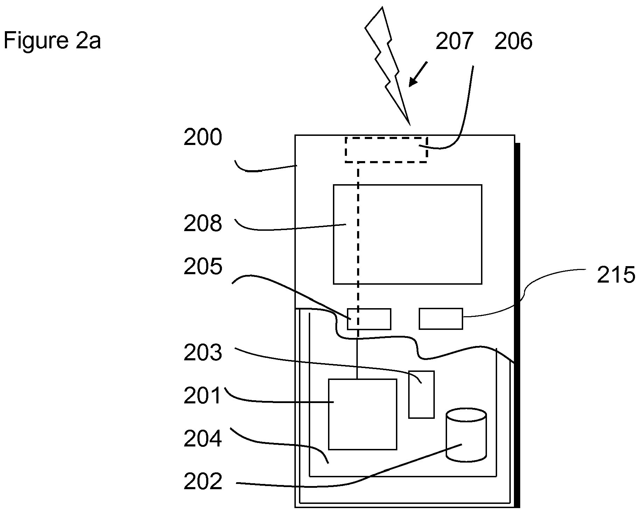

A possible schematic view of an electronic device, for example a mobile communication device or UE, an access point or base station, according to some embodiments is shown in Figure 2a. Such an electronic device 200 may be provided by any device capable of sending and receiving radio signals.

The electronic device 200 may, for example when running the application or game, communication of data for carrying communications such as voice, multimedia (for example image and audio data), sensor information (for example from a gyroscope, compass, GPS receiver etc), gaming control data, and so on.

The electronic device 200 may receive signals over an air or radio interface 207 via appropriate apparatus for receiving (e.g., a receiver) and may transmit signals via appropriate apparatus for transmitting radio signals (e.g., a transmitter). In Figure 2a transceiver apparatus is designated schematically by block 206. The transceiver apparatus 206 may be provided for example by means of a radio part and associated antenna arrangement. The antenna arrangement may be arranged internally or externally to the electronic device 200. The antenna may be able to be mechanically or electronically steered and may by omnidirectional or directional in nature.

The electronic device 200 may be provided with at least one data processing entity 201, at least one memory 202 and other possible components 203 for use in software and hardware aided execution of tasks it is designed to perform. For example the components may comprise at least one of: at least one camera configured to capture at least one image, at least one microphone configured to capture at least one audio signal, at least one positional and/or orientation sensor configured to enable the electronic device to determine the position and/orientation of the electronic device. Examples of suitable positional and/or orientation sensors include gyroscopes, digital compasses, satellite position receivers, and indoor positioning or beacon receivers. The data processing, storage and other relevant control apparatus can be provided on an appropriate circuit board and/or in chipsets. This feature is denoted by reference 204. The electronic device 200 may be further controlled by means of a suitable interface such as input/output ports 205 and 215. For example electronic device 200 may be controlled via voice commands, touch sensitive screen or pad, combinations thereof or the like. The electronic device 200 may in some embodiments be equipped with suitable output components. For example the electronic device 200 may be equipped with a display 208 for outputting images and a speaker and/or audio output for providing a suitable audio signal output.

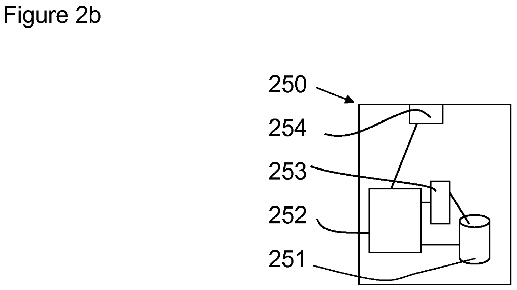

Figure 2b shows an example implementation of a gaming server 151 according to some embodiments for example to be coupled to and/or for receiving information from the electronic device 200. The gaming server 151 may be implemented as a single node or distributed nodes of a network. The gaming server 151 comprises at least one memory 251, at least one data processing unit 252, 253 and an input/output interface 254. Via the interface the control apparatus can be coupled to a receiver and a transmitter, for example to communicate with the electronic device 200.

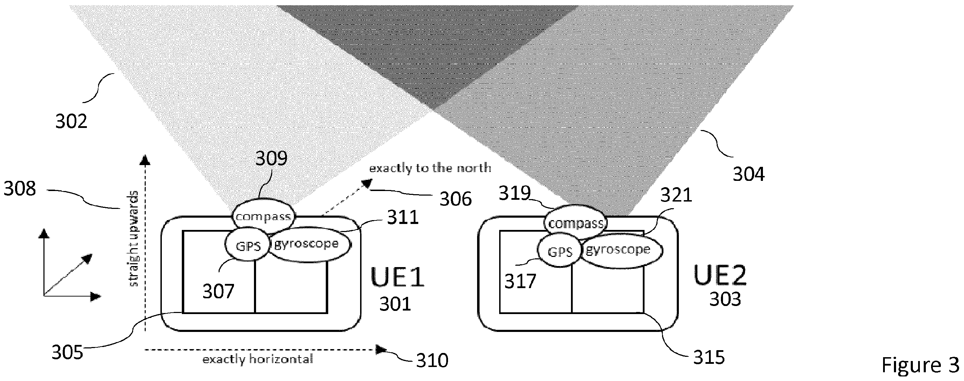

A schematic view of an example system according to some embodiments operating within an example virtual coordinate system is shown with respect to Figure 3. The system is shown by two example electronic devices, a first user equipment UE1 301 and a second user equipment UE 2 303.

The UE1 301 is shown comprising a camera capturing an image from a first point of view shown by image cone 302. UE1 301 is further shown a display 305 for displaying an image to the user of UE1 301. Also UE1 301 is shown comprising sensors such as compass 309, gyroscope 311 and GPS (global positioning system) receiver 307 for providing position and/or orientation information. This positional information may in some embodiments be defined relative to a vertical axis (a straight upwards direction) 308, a horizontal axis (exactly horizontal direction 310) and a reference direction (exactly to the north direction) 306.

UE2 302 is also shown comprising a camera capturing an image from a further point of view shown by image cone 304. The image cone 302 and further image cone 304 are shown with an overlapping indicating that in this example UE1 and UE2 are located within the same scene.

UE2 303 is further shown a display 315 for displaying an image to the user of UE2 303. Also UE2 303 is shown comprising sensors such as compass 319, gyroscope 321 and GPS receiver 317 for providing position and/or orientation information relative to the same vertical axis (a straight upwards direction) 308, a horizontal axis (exactly horizontal direction) 310 and a reference direction (exactly to the north direction) 306.

In order to allow a scene to be "viewed" by more than one device from more than one point-of-view according to some embodiments, a virtual coordination system is implemented.

Neglecting geographical positions at a first step, this virtual coordination system may be represented by vectors v1, v2, v3 representing the camera's position and turn angles (which in some embodiments is also the electronic device's position and turn angles) in a scene. Those vectors may be organized in a transformation matrix, which may be defined as T-M. The T-M, may be a normal matrix. In some embodiments the T-M may be defined such that an electronic device substantially horizontal [along the device's top and bottom edge] and substantially vertical [along the device's left and right edge] and if the camera (or device) is pointing exactly to the reference location (for example north) may be defined by one 1 value and two 0 values in each vector.

This example reference matrix may therefore be defined as:

$$T\text{-}M_{Ref} = (V1ref, v2ref, v3ref)$$

$$= \begin{pmatrix} \mathbf{1} & \mathbf{0} & \mathbf{0} & 0 & \text{camera pointing exactly to the north} \\ \mathbf{0} & \mathbf{1} & \mathbf{0} & 0 & \textit{device substantially oriented straight upwards} \\ \mathbf{0} & \mathbf{0} & \mathbf{1} & 0 & \textit{device substantially oriented horizontally} \\ 0 & 0 & 0 & 0 \end{pmatrix}$$

This specific orientation is denoted as T-M$_{Ref}$ in Figure 3. Any deviation from this position will result in different values in the matrix denoted as T-M. In such a manner the electronic devices' 'view' on a scene may be represented.

In the example as shown in Figure 3 with two players with two electronic devices looking or viewing the same scene at the same viewing angles, they would have a similar T-M and a similar "view" (with a neglectable parallax difference or error).

In some embodiments the two electronic devices UE1 301 and UE2 303 may be located at different geographical locations within the scene. In such embodiments positional estimation such as data from the GPS receiver can be used to distinguish their exact location within the scene.

In such embodiments an additional position matrix P-M may be defined which provides positioning information P-M within a "world" defined by a transformation matrix T-M.

The generation of these matrixes and the processing of these matrixes may be implemented by any suitable manner, and may be implemented by functions provided by manufacturers or open source functions. The methods for generating T-M and optionally P-M will not be further discussed for clarity.

Applications and software which generate T-Ms and P-Ms from data provided by onboard gyroscopes, compasses and optional GPS is known. Furthermore the implementation of applications and software which employs these T-M and P-M matrixes to generate a 2D view on 3D scene (i.e. an image that is displayed) and which allows the placement of objects in said scene is also known. It shall be further noted that an object (e.g. represented by a PNG image) can be placed into a scene by using a view matrix defined as V-M.

This V-M allows a positioning or location of an object based on in-scene location parameters, e.g. rotation. By the implementation of arithmetic combinations of T-M, P-M and V-M a 3D scene including objects can be fully rendered to a 2D image.

In the example shown herein the T-M matrix shown is a 4x4 matrix. The right most row and the bottom column in some embodiments is not used for storing vector data, however this row/column is used to store information indicating the matrix type (T-, P- or V) or their processed derivative (e.g. TxP) and is not discussed furthermore.

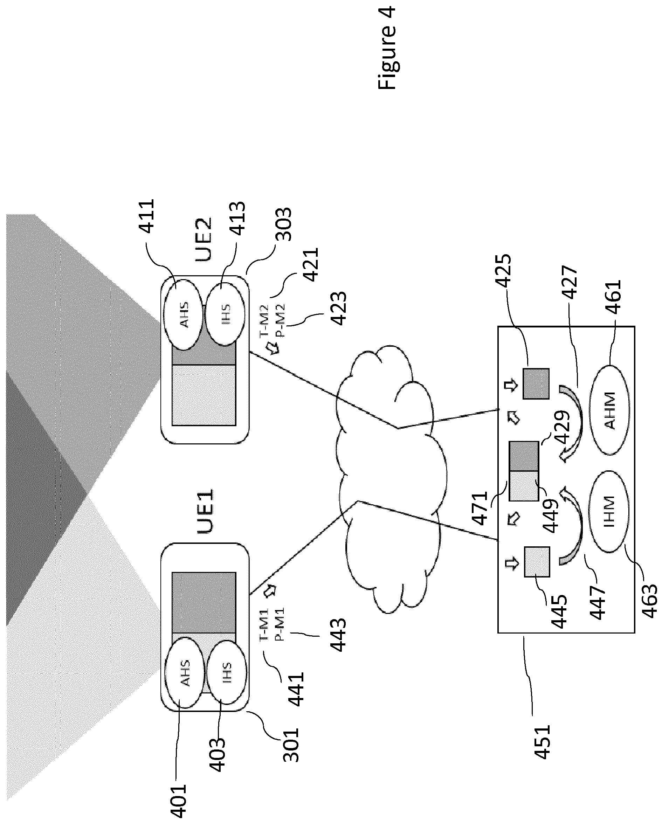

With respect to Figure 4 is shown a schematic view of example functions implementing the coordination of the example virtual coordinate system according to some embodiments. In the example shown in Figure 4 the electronic devices UE1 301 and UE2 303 are arranged in the same manner as shown in Figure 3 in that both devices UE1 301 and UE2 303 have the same view on the scene [with a negligible angle difference].

In this example UE1 301 comprises an augmentation handler - slave (AHS) 401 and an image handler - slave (IHS) 403. The AHS 401 function is configured to generate and encode for transmission the electronic device view defined by a first UE transformation-matrix T-M1 441. The AHS 401 may then transmit the T-M1 441 to the game server 451 which may furthermore comprise an augmentation handler - master (AHM) 461.

In some embodiments the AHS 401 is further configured to define the position of the UE using the first UE positional-matrix P-M1 443. The AHS 401 may then encode and transmit the P-M1 to the game server 451.

In some embodiments the image handler - slave (IHS) 403 is configured to encode and transmit image(s) captured by electronic device camera. The encoded image(s) may be transmitted to the game server 451 which may comprise an image handler - master (IHM) 463. In some embodiments the encoding and transmission of the image(s) may be at a defined frame rate (for example 25 frames per second).

Also as shown in Figure 4 UE2 303 comprises an augmentation handler - slave (AHS) 411 and an image handler- slave (IHS) 413. The AHS 411 function is configured to generate and encode for transmission the UE2 device view defined by a second UE transformation-matrix T-M2 421. The AHS 411 may then transmit the T-M2 421 to the game server 451.

In some embodiments the AHS 411 is further configured to define the position of the UE2 using the second UE positional-matrix P-M2 423. The AHS 411 may then encode and transmit the P-M2 423 to the game server 451.

In some embodiments the image handler - slave (IHS) 403 is configured to encode and transmit image(s) captured by electronic device camera. The encoded image(s) may be transmitted to the game server 451 and to the image handler - master (IHM) 463. In some embodiments the encoding and transmission of the image(s) may be at a defined frame rate (for example 25 frames per second).

The game server 451 as discussed above may comprise image handler - master (IHM) 463 configured to receive the images from the UE1 301 and UE2 303. The IHM 463 in some embodiments may be configured to combine both images to one image. Thus for example a first image 445 from UE1 301 and a second image 425 from UE2 303 may be combined to produce a combined image 471 comprising a first part 449 based on the first image 445 and a second part 429 based on the second image 425.

In some embodiments the IHM is configured to produce a combined image further comprising additional information (e.g. text, score).

In some embodiments the IHM 463 is configured to receive the images from UEs and apply processing (e.g. dimming, different scaling, object recognition, etc) to such images and send the image to the other devices (where the image may be used to generate the combined or composite image at the electronic device).

In some embodiments the IHM 463 (and in some embodiments the IHS 403, 413) is configured to compress any image (using a suitable compression algorithm, for example jpeg compression) before transmitting the image.

In some embodiments the game server 451, as also discussed above, comprises an augmentation handler - master (AHM) 461, The AHM 461 is configured to receive the UE determined position/location matrixes. For example the game server 451 and the AHM 461 may be configured to receive from the UE1 301 the T-M1 (and optionally P-M1) and from the UE1 303 the T-M2 (and optionally P-M2).

In some embodiments the AHM 461 is configured to forward the received matrices to other UE. Thus for example in some embodiments the AHM is configured to transmit to UE1 the matrix data of UE2, T-M2 (and optionally P-M2) and transmit to UE2 the matrix data of UE1 T-M1 (and optionally P-M1). In some embodiments comprising more than 2 UE viewing the scene each UE may receive more than one T-M (and optionally P-M) associated with the other UEs viewing the scene.

In such embodiments the UE AHS, for example UE1 301 AHS 401 or UE2 303 AHS 411 may be configured to receive these forwarded matrices and use this information to place an object into the "scene" based on the other electronic device's point of view.

In some embodiments this may be implemented by placing the object in the "middle" of the point-of-view. However in some other embodiments the placement may be any suitable placement for example the object may be placed "deeper" or at slightly different places (represented by T-M* in figure) with a different rotation and or moving path using additional V-matrixes.

Once the object is placed, the image will be displayed.

In some embodiments both communication procedures (sending images and sending matrixes) may be implemented on a defined basis (e.g. 30 times per second). In some embodiments the images and matrixes may be sent/received at different frequencies.

In such embodiments the sending and receiving images and the sending and receiving of matrixes and placement of objects may be de-coupled. In other words objects can be placed and moved around a "scene" independent from a received image. In such a manner the augmentation and the general user perception may be kept fluid even where video transmission may be temporarily blocked (some milliseconds).

Furthermore by receiving other electric device matrices, each device may be enabled to create and display a view in their augmented reality world view having the same parameters, view and display as any other electronic device user. As such some embodiments may be able to "share" the same augmented reality between multiple devices and users.

In some embodiments as the video data is separated from the augmented data (which may include object information or data to be inserted into the video or image) then object transformation action or information can be sent independently of the image data.

Embodiments which therefore employ this independently sending of data has the advantage that even when one of the players suffers from video transmission errors (lost or delayed packets) and therefore no new video frame arrives (or delayed) results in the independently sent object information able to be sent to the other users.

So in the situation where the game server does not merge the image and the augmentation objects then where there is an image delay the other users might not receive video frame updates but the augmented objects would still receive their updated metadata and can be displayed independently on each participant's display.

Furthermore in some embodiments where the video gets processed and merged at the game server, the game server can be configured to send an "outdated" video frame for the stuck participant, however the augmented part would still be 'fresh'.

In some embodiments when the electronic device network connection degrades, the electronic device and/or the game server may be configured to modify the video or image resolution, compression or framerate such that the camera/position updates are more frequently or faster sent to the game server and therefore to the other users than the video image or audio data.

In some embodiments real-time updates (for example the electronic device position) can be processed earlier than the (in some cases less relevant) video or image data from the camera. In such embodiments this enables the game server to have the information as early as possible to calculate whether the users can 'see' and interact with each other.

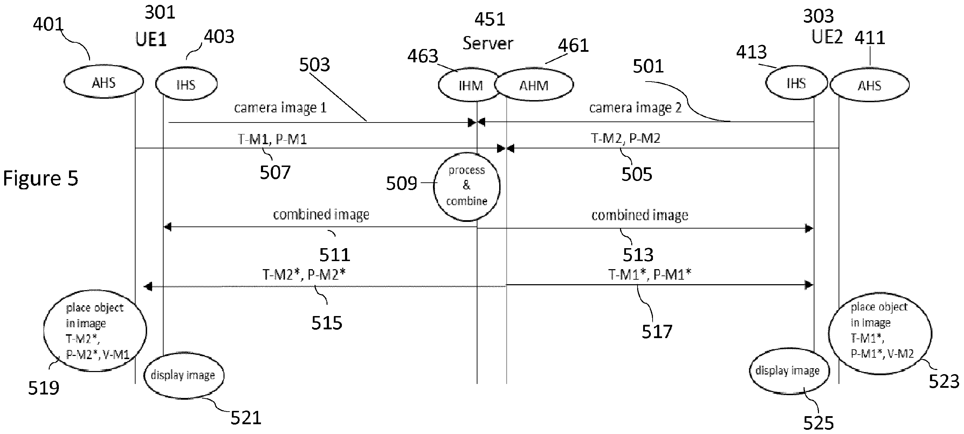

With respect to Figure 5 a flow diagram shows the operations of the embodiments as shown in Figure 4.

With respect to the UE1 301 (and in some embodiments based on the IHS 403) is caused to transmit the camera image 1 to the game server 451 IHM 463 as shown in step 503.

UE1 301 (and in some embodiments based on the AHS 401) is caused to generate and transmit the transformation matrix T-M1 (and optionally the positional matrix P-M1) to the game server 451 AHM 461 as shown in step 507.

UE2 303 (and in some embodiments based on the IHS 413) is caused to transmit the camera image 2 to the game server 451 IHM 463 as shown in step 501.

UE2 303 (and in some embodiments based on the AHS 411) is caused to generate and transmit the transformation matrix T-M2 (and optionally the positional matrix P-M2) to the game server 451 AHM 461 as shown in step 505.

The IHM 463 may then process and combine the received images as shown in Figure 5 by step 509.

The game server 451 (and in some embodiments based on the IHM 463) is caused to then transmit the combined image to the UE1 301 as shown in Figure 5 by step 511.

The AHM 461 (or more generally the game server) may furthermore be configured to transmit processed T-M (and optionally P-M) (or simply forward received T-M and P-M to the other electronic devices). For example the AHM 461 may transmit a processed T-M1, defined as T-M1* (and processed P-M1, defined as P-M1*) to UE2 303 as shown in Figure 5 by step 517. The AHM 461 may furthermore transmit a processed T-M2, defined as T-M2* (and processed P-M2, defined as P-M2*) to UE1 301 as shown in Figure 5 by step 515.

UE1 301 (and in some embodiments the AHS 401) may be configured to place objects within the image based on the received matrices. For example the placement of objects may be based on the received T-M2*, P-M2* and also in some embodiments V-M1 as shown in Figure 5 by step 519.

The UE1 301 (and in some embodiments the IHS 403) is then configured to display the image as shown in Figure 5 by step 521.

UE2 303 (and in some embodiments the AHS 411) may be configured to place objects within the image based on the received matrices. For example the placement of objects may be based on the received T-M1*, P-M1* and also in some embodiments V-M2 as shown in Figure 5 by step 523.

The UE2 303 (and in some embodiments the IHS 413) is then configured to display the image as shown in Figure 5 by step 525.

In the embodiments described above the transmission of the image data and the augmented data (the P-M, T-M data) is sent via separate messages. However in some embodiments the transmission of the image data and the augmented data although being independent is transmitted such that the image data packets may further comprise at least a part of the augmented data. This may be useful in situations where packets may be lost and the system may be able to revert to a lower quality operation even where the augmented data only packets are lost.

In general, the various embodiments may be implemented in hardware or special purpose circuits, software, logic or any combination thereof. Some aspects of the invention may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:

(a) hardware-only circuit implementations (such as implementations in only analogue and/or digital circuitry) and
(b) combinations of hardware circuits and software, such as (as applicable):

(i) a combination of analogue and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this invention may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims. Indeed there is a further embodiment comprising a combination of one or more embodiments with any of the other embodiments previously discussed.

**Claims**

1. An apparatus comprising means for:

   generating at least one parameter defining the apparatus point of view within a scene;
   generating at least one image capturing the scene and associated with the apparatus point of view;
   transmitting the at least one parameter defining the apparatus point of view within a scene and the at least one image capturing the scene and associated with the apparatus point of view to an additional apparatus independently.

2. The apparatus as claimed in claim 1, wherein the means is further configured for receiving, from the additional apparatus, at least one further parameter based on at least one further apparatus point of view and at least one further image independently, the at least one further image based on the at least one further apparatus capturing of the scene and associated with the at least one further apparatus point of view.

3. The apparatus as claimed in claim 2, wherein the means is further configured for rendering at least one augmentation related element based on the at least one parameter defining the apparatus point of view within a scene and the at least one further parameter based on the at least one further apparatus point of view.

4. The apparatus as claimed in claim 3, wherein the means for rendering at least one augmentation related element based on the at least one parameter defining the apparatus point of view within a scene and the at least one further parameter based on the at least one further apparatus point of view is configured for generating at least one object to be located within the at least one image based on the at least one further parameter.

5. The apparatus as claimed in claim 4, wherein the means is further configured for displaying a combined image based on the at least one further image and the at least one object.

6. The apparatus as claimed in any of claims 2 and 5, wherein the means for receiving, from the additional apparatus, at least one further parameter based on at least one further apparatus point of view is configured for receiving at least one of:

   at least one augmentation object information based on the received at least one parameter from others of the at least one further apparatus;
   at least one transformation matrix defining at least one further apparatus orientation; and
   at least one positional matrix defining at least one further apparatus position.

7. The apparatus as claimed in any of claims 2 to 6, wherein the means for receiving, from the additional apparatus the at least one further image is further configured for receiving the combined image comprising at least one of:

   the at least one further image;
   the at least one image;
   a processed at least one further image;

a processed at least one image; and
an overlay element.

8. The apparatus as claimed in any of claims 1 to 7, wherein the means for transmitting the at least one image capturing the scene and associated with the apparatus point of view to an additional apparatus is further configured for encoding the at least one image capturing the scene before being configured for transmitting the at least one image.

9. The apparatus as claimed in any of claims 1 to 8, wherein the means is further configured for implementing an augmented reality game comprising the displayed combined image, wherein the at least one parameter defining the apparatus point of view within a scene is decoupled from the at least one image capturing the scene and associated with the apparatus point of view.

10. The apparatus as claimed in any of claims 1 to 9, wherein the means for transmitting the at least one parameter defining the apparatus point of view within a scene and the at least one image capturing the scene and associated with the apparatus point of view to an additional apparatus independently is further configured to transmit one of:

    at least one packet comprising the at least one parameter defining the apparatus point of view within a scene and at least one packet comprising the at least one image capturing the scene; and
    at least one packet comprising the at least one parameter defining the apparatus point of view within a scene and at least one packet comprising the at least one image capturing the scene and the at least one parameter defining the apparatus point of view within a scene.

11. An apparatus comprising means for receiving from each of at least two separate further apparatus:

    at least one parameter defining the further apparatus point of view within a scene; and
    at least one image capturing the scene and associated with the further apparatus point of view, the at least one parameter defining the further apparatus point of view within a scene; and the at least one image capturing the scene and associated with the further apparatus point of view having been transmitted independently.

12. The apparatus as claimed in claim 11, wherein the means for is further configured for:

    processing and combining the received image capturing the scene to generate at least one combined image;
    transmitting to each of the at least two separate further apparatus the at least one combined image;
    transmitting to each further apparatus at least one parameter based on the received at least one parameter from others of the at least one further apparatus, wherein the at least one combined image and the at least one parameter based on the received at least one parameter from others of the at least one further apparatus are transmitted independently.

13. The apparatus as claimed in claims 12, wherein the means for transmitting to each of the at least two separate further apparatus the at least one combined image is further configured for encoding the at least one combined image before being configured for transmitting the at least one combined image.

14. The apparatus as claimed in any of claims 12 to 13, wherein the means for transmitting to each of the at least two separate further apparatus the at least one combined image is further configured for transmitting a combined image comprising at least one of:

    the at least one further image;
    the at least one image;
    a processed at least one further image;
    a processed at least one image; and
    an overlay element.

15. The apparatus as claimed in any of claims 12 to 14, wherein the means for transmitting to each of the at least two separate further apparatus the at least one combined image; and transmitting to each further apparatus at least one parameter based on the received at least one parameter from others of the at least one further apparatus are further configured for transmitting one of:

    at least one packet comprising the at least one combined image and at least one further packet comprising the at least one parameter based on the received at least one parameter from others of the at least one further apparatus; and

at least one packet comprising the at least one combined image and the at least one parameter based on the received at least one parameter from others of the at least one further apparatus and at least one further packet comprising the at least one parameter based on the received at least one parameter from others of the at least one further apparatus.

Figure 1

Figure 2a

Figure 2b

250
254
253
252
251

Figure 3

Figure 4

Figure 5

| | Europäisches Patentamt European Patent Office Office européen des brevets | **EUROPEAN SEARCH REPORT** | Application Number EP 18 16 7898 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 838 140 B1 (LEDET DAVID GERARD [US]) 16 September 2014 (2014-09-16) * abstract * * column 2, line 33 - line 50; figure 2 * * column 5, line 25 - line 26 * * column 6, line 5 - line 25 * * column 7, line 3 - line 15 * * column 8, line 40 - column 9, line 12 * * claims 6,12 * ----- | 1-15 | INV. G06T19/00 G06T11/00 H04L29/08 |
| X | Jeffrey W Chastine: "ON INTER-REFERENTIAL AWARENESS IN COLLABORATIVE AUGMENTED REALITY.CHAPTER 7 FOLLOW-UP STUDY AND ARCHITECTURE", , 2007, XP055507356, Retrieved from the Internet: URL:https://pdfs.semanticscholar.org/b7dc/98a956f3ff7d39a4e0a773d43c8851d3f2ed.pdf [retrieved on 2018-09-17] * page 130, lines 13-16, 22, 23 * * page 141, line 3 - page 142, line 5 * * page 144, line 1 - page 145, line 15 * ----- | 1-15 | |
| X | US 2006/271251 A1 (HOPKINS JEFFREY A [US]) 30 November 2006 (2006-11-30) * paragraphs [0081], [0116] * ----- | 1,11 | TECHNICAL FIELDS SEARCHED (IPC) G06T H04L |

-/--

The present search report has been drawn up for all claims

| Place of search | Date of completion of the search | Examiner |
|---|---|---|
| Berlin | 17 September 2018 | Reise, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 18 16 7898

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BOULANGER ET AL: ""A real-time augmented reality system for industrial tele-taining"", VISUAL COMMUNICATIONS AND IMAGE PROCESSING; 20-1-2004 - 20-1-2004; SAN JOSE,, vol. 5013, 21 January 2003 (2003-01-21), pages 1-13, XP002347972, DOI: 10.1117/12.473350 ISBN: 978-1-62841-730-2 * section 2.3.3 section 3.3 section 5.2 * ----- | 1-15 | |
| | | | **TECHNICAL FIELDS SEARCHED (IPC)** |

The present search report has been drawn up for all claims

| Place of search | Date of completion of the search | Examiner |
|---|---|---|
| Berlin | 17 September 2018 | Reise, Frank |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 16 7898

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2018

| Patent document cited in search report | | Publication date | Patent family member(s) | Publication date |
|---|---|---|---|---|
| US 8838140 | B1 | 16-09-2014 | NONE | |
| US 2006271251 | A1 | 30-11-2006 | NONE | |

EPO FORM P0459

For more details about this annex : see Official Journal of the European Patent Office, No. 12/82